# EUROPÄISCHE PATENTANMELDUNG

(11) **EP 1 772 692 A1**
(43) Veröffentlichungstag der Anmeldung: **11.04.2007**
(21) Anmeldenummer: 05021861.9
(22) Anmeldetag: 05.10.2005
(51) Int. Cl.: F27D 17/00, F23J 13/00

(54) **Vorrichtung zur Abkühlung von Abgasen**

(71) Anmelder: OSCHATZ GMBH, 45143 Essen (DE)
(72) Erfinder: Hüning, Herbert, 46348 Raesfeld (DE)
(74) Vertreter: Rohmann, Michael

(57) **Zusammenfassung**

Vorrichtung zur Abkühlung von Abgasen, insbesondere zur Abkühlung von Abgasen aus einem Schmelzreduktionsofen zur Roheisenherstellung. Es ist ein Ofen vorgesehen, aus dem die Abgase austreten und im oberen Bereich des Ofens ist ein Abgaskanal zur Abführung und Kühlung der Abgase angeschlossen. Zumindest ein an den Ofen angeschlossener Abgaskanalabschnitt wird durch ein Kühlmedium gekühlt, das eine Temperatur T₁ aufweist. Zumindest das Oberteil des Ofens, an dem der Abgaskanalabschnitt angeschlossen ist, wird mit einem Kühlmedium gekühlt, das ebenfalls die Temperatur T₁ aufweist.
Der Erfindung liegt die Erkenntnis zugrunde, dass unerwünschte relative Wärmedehnungen, insbesondere vertikale Wärmedehnungen zwischen Ofen und Abgaskanal effektiv und funktionssicher vermieden werden können, wenn der Ofen mit einem Kühlmedium der gleichen Temperatur gekühlt wird wie der Abgaskanal. Gegenüber den aus dem Stand der Technik bekannten Vorrichtungen kann auf aufwendige Kompensatoren im Übergangsbereich zwischen Ofen und Abgaskanal verzichtet werden.
Störende Wärmeausdehnungen werden wirksam vermieden.

## Beschreibung

Die Erfindung betrifft eine Vorrichtung zur Abkühlung von Abgasen, insbesondere zur Abkühlung von Abgasen aus einem Schmelzreduktionsofen zur Roheisenherstellung, wobei ein Ofen vorgesehen ist, aus dem die Abgase austreten und wobei im oberen Bereich des Ofens ein Abgaskanal zur Abführung und Kühlung der Abgase angeschlossen ist.

In dem Ofen der erfindungsgemäßen Vorrichtung werden insbesondere Abgase erzeugt, die unter Überdruck in den Abgaskanal gelangen. Dort herrscht beispielsweise ein Druck von ungefähr 0,8 bar über Atmosphärendruck. Das Abgas tritt mit einer relativ hohen Temperatur in den Abgaskanal ein, beispielsweise mit einer Temperatur von ca. 1.450°C. In dem gasdichten und gekühlten Abgaskanal werden die Abgase auf eine Temperatur abgekühlt, die beispielsweise für die Vorwärmung von Erz geeignet ist. Die Abkühlung der Abgase bzw. Rauchgase erfolgt mit einem Kühlmedium, das durch Kühlrohre an den Abgaskanalwänden geführt wird. Bei dem Kühlmedium handelt es sich insbesondere um Siedewasser, das beispielsweise eine Temperatur von 260°C aufweist.

Aus der Praxis sind Vorrichtungen der eingangs genannten Art bekannt, bei denen die Innenwand des Ofens mit einem durch entsprechende Kühlrohre an der Innenwand geleiteten Kühlmedium abgekühlt wird. Als Kühlmedium wird hier flüssiges Wasser mit einer Temperatur von beispielsweise 60°C durch die Kühlrohre der Ofeninnenwand geleitet. Nach Abkühlung der Ofeninnenwand wird das erhitzte flüssige Wasser, das dann beispielsweise eine Temperatur von 80°C aufweist, entsorgt, ohne dass die aufgenommene Wärme genutzt wird. Diese bekannten Vorrichtungen haben den Nachteil, dass aufgrund der unterschiedlichen Temperaturen der Ofeninnenwandkühlung einerseits und des Abgaskanals andererseits unterschiedliche Wärmedehnungen, insbesondere vertikale Wärmedehnungen der verschiedenen Anlagenkomponenten resultieren. Das führt dazu, dass zur Kompensation dieser Wärmedehnungen aufwendig ausgestaltete Kompensatoren eingebaut werden müssen. Im Übrigen lässt die Kühlung der Ofeninnenwand bzw. bestimmter Bereiche der Ofeninnenwand bei manchen bekannten Vorrichtungen zu wünschen übrig.

Der Erfindung liegt das technische Problem zugrunde, eine Vorrichtung der eingangs genannten Art anzugeben, mit der die vorstehend beschriebenen Nachteile effektiv vermieden werden können.

Zur Lösung dieses technischen Problems lehrt die Erfindung eine Vorrichtung zur Abkühlung von Abgasen, insbesondere zur Abkühlung von Abgasen aus einem Schmelzreduktionsofen zur Roheisenherstellung,
wobei ein Ofen vorgesehen ist, aus dem die Abgase austreten und wobei im oberen Bereich des Ofens ein Abgaskanal zur Abführung und Kühlung der Abgase angeschlossen ist,
wobei zumindest ein an den Ofen angeschlossener Abgaskanalabschnitt durch ein Kühlmedium gekühlt wird, das eine Temperatur T₁ aufweist
und wobei zumindest das Oberteil des Ofens, an den der Abgaskanalabschnitt angeschlossen ist, mit einem Kühlmedium gekühlt wird, das ebenfalls die Temperatur T₁ aufweist.

Mit der Temperatur T₁ des Kühlmediums ist die Temperatur gemeint, mit der das Kühlmedium dem zu kühlenden Abgaskanal bzw. Abgaskanalabschnitt und dem zu kühlenden Ofen zugeführt wird. Dass das Kühlmedium zur Kühlung des Oberteils des Ofens ebenfalls die Temperatur T₁ des Kühlmediums zur Kühlung des Abgaskanals aufweist, meint im Rahmen der Erfindung auch, dass das Kühlmedium zur Kühlung des Ofens im Wesentlichen ebenfalls die Temperatur T₁ aufweist. Die Temperatur des Kühlmediums zur Kühlung des Ofenoberteils kann dabei bis zu 15°C, bevorzugter bis zu 10°C und noch bevorzugter bis zu 5°C von der Temperatur T₁ des Kühlmediums für den Abgaskanal nach oben oder nach unten abweichen. Nach besonders bevorzugter Ausführungsform weicht die Temperatur des Kühlmediums zur Kühlung des Ofenoberteils lediglich 0 bis 2°C von der Temperatur T₁ des Kühlmediums für den Abgaskanal nach oben oder nach unten ab.

Wesentlich ist im Rahmen der Erfindung, dass die erfindungsgemäße Vorrichtung vorzugsweise mit Gasüberdruck betrieben wird. Das bedeutet, dass das Abgas unter Überdruck aus dem Ofen in den Abgaskanal eintritt, wobei das Abgas beispielsweise einen Druck von etwa 0,8 bar über Atmosphärendruck aufweisen kann. Mit einem solchen Gasüberdruck sind Zwänge bzw. erhebliche mechanische Beanspruchungen der Anlagenkomponenten verbunden. Nichtsdestoweniger arbeitet die erfindungsgemäße Vorrichtung auch bei einem solchen Gasüberdruck bei Verwirklichung der erfindungsgemäßen Merkmale einwandfrei.

Nach besonders bevorzugter Ausführungsform der Erfindung wird zumindest ein Abzweigstutzen, der dem Oberteil des Ofens und dem Abgaskanal zwischengeschaltet ist, ebenfalls mit dem Kühlmedium des Ofens gekühlt. Bei dem Abzweigstutzen handelt es sich um einen Anschlussstutzen für das ofenseitige Ende des Abgaskanals. Das Kühlmedium für die Ofenkühlung kann also zunächst für die Kühlung der Innenwand des Ofens eingesetzt werden und anschließend in den Abzweigstutzen zur Kühlung des Abzweigstutzens eingeführt werden. Das Kühlmedium mit der Temperatur T₁ kann aber auch parallel sowohl in den Abzweigstutzen zur Kühlung des Abzweigstutzens als auch in das Oberteil des Ofens zwecks Kühlung dieses Oberteils eingeführt werden.

Zweckmäßigerweise beträgt die Temperatur T₁ mehr als 150°C, vorzugsweise mehr als 200°C, bevorzugt mehr als 230°C und sehr bevorzugt mehr als 240°C. Es liegt im Rahmen der Erfindung, dass die Temperatur T₁ zwischen 240 und 280°C liegt, vorzugsweise zwischen 250 und 270°C. Die Temperatur T₁ beträgt nach besonders bevorzugter Ausführungsform der Erfindung 260°C oder in etwa 260°C. Dabei hat sowohl das Kühlmedium zur Kühlung der Ofeninnenwand als auch das Kühlmedium zur Kühlung des Abgaskanals diese Temperatur T₁. Bei der Temperatur T₁ handelt es sich jeweils um die Temperatur des der Ofeninnenwand oder dem Abgaskanal zugeführten Kühlmediums. Zweckmäßigerweise hat auch das Kühlmedium zur Kühlung der Wandung des Abzweigstutzens die Temperatur T₁.

Es liegt im Rahmen der Erfindung, dass das Kühlmedium für den Ofen bzw. für die Ofeninnenwand und/oder für den Abzweigstutzen des Ofens Siedewasser ist. Zweckmäßigerweise wird sowohl das Oberteil des Ofens als auch der Abzweigstutzen mit Siedewasser gekühlt. Kühlung mit Siedewasser meint, dass bei der Kühlung aus dem Siedewasser Wasserdampf bzw. ein Wasser/Wasserdampf-Gemisch entsteht. Es handelt sich also um eine Verdampfungskühlung. Es liegt im Rahmen der Erfindung, dass auch der Abgaskanal bzw. der Abgaskanalabschnitt mit Siedewasser gekühlt wird. Die Verdampfungskühlung für den Ofen bzw. für das Oberteil des Ofens weist ganz besondere Vorteile auf. So kann der erzeugte Dampf hier im Gegensatz zu den aus dem Stand der Technik bekannten Vorrichtungen sehr effektiv zur Wärmerückgewinnung bzw. zur Energierückgewinnung genutzt werden. Es liegt im Rahmen der Erfindung, dass das Kühlmedium für den Ofen durch Kühlrohre geführt wird, die zweckmäßigerweise an der Innenwand des Oberteils des Ofens angeordnet sind. Vorzugsweise wird ein Kühlmantel an der Innenwand des Ofens bzw. an der Innenwand des Oberteils des Ofens aus diesen Kühlrohren gebildet bzw. gewickelt. Nach besonders bevorzugter Ausführungsform der Erfindung erstrecken sich die Kühlrohre für die Kühlung des Ofens bzw. für die Kühlung des Oberteils des Ofens auch in den zumindest einen Abzweigstutzen. Die Kühlrohre sind dabei gleichsam in den Abzweigstutzen eingewickelt, wobei sie an der Wand des Abzweigstutzens als Kühlmantel angeordnet sind. Nach bevorzugter Ausführungsform der Erfindung strömt das Kühlmedium zunächst durch Kühlrohre an der Innenwand des Ofens und danach in Kühlrohre, die an der Wand des Abzweigstutzens angeordnet sind. Diese gemeinsame Kühlung für Ofen und Abzweigstutzen hat sich bewährt. Der Einsatz der Verdampfungskühlung für die erfindungsgemäße Vorrichtung ermöglicht es, dass relativ kleine Kühlrohrdurchmesser verwirklicht werden können. Dadurch können die Kühlrohre auch mit minimalen Biegeradien zu dem Kühlmantel gewickelt werden. Die Rohrdurchmesser der für den Ofen und/oder den Abzweigstutzen eingesetzten Kühlrohre sind zweckmäßigerweise kleiner als 60 mm und bevorzugt in der Größenordnung zwischen 30 und 50 mm. Insbesondere aufgrund der möglichen kleinen Biegeradien der Kühlrohre können Kühlmäntel verwirklicht werden, mit denen sowohl eine sehr effektive Kühlung der Ofeninnenwand als auch eine sehr wirksame Kühlung der Wand des Abzweigstutzens möglich ist. Insbesondere bei einer Ausführungsform mit zwei an dem Ofen vorgesehenen Abzweigstutzen kann ein schmaler Ofeninnenwandbereich zwischen diesen beiden Abzweigstutzen einfach und funktionssicher gekühlt werden. Diese Ausführungsform wird weiter unten noch erläutert. Die Verdampfungskühlung bringt auch den Vorteil mit sich, dass im Vergleich zu der aus dem Stand der Technik bekannten Kühlung der Ofeninnenwand mit einer Abführung von flüssigem Wasser Korrosionsprobleme und Ablagerungsprobleme in den Kühlrohren weitgehend vermieden werden können.

Grundsätzlich kann für die Kühlung der Ofeninnenwand und/oder für die Kühlung des zumindest einen Abzweigstutzens ein durchgängig aus einem Kühlrohr gewickelter Kühlmantel verwirklicht werden. Nach besonders bevorzugter Ausführungsform der Erfindung bilden die Kühlrohre aber einen Kühlmantel, der aus einer Mehrzahl von Kühlmantelabschnitten besteht, die separat durchströmt werden können und zwar vorzugsweise parallel und die bei Bedarf einzeln absperrbar sind. Die Kühlrohre bilden gemäß dieser Ausführungsform also separate Kühlschlangen. Diese Ausführungsform hat insbesondere den Vorteil, dass defekte Kühlmantelteile abgeschaltet werden können, ohne dass die Kühlwirkung der übrigen Kühlmantelabschnitte beeinträchtigt wird. Bei einer Leckage an einem Kühlrohr muss also nicht die gesamte Vorrichtung stillgelegt werden, sondern bei weiterer Funktionsweise der übrigen Kühlmantelabschnitte kann ein defekter Kühlmantelabschnitt abgeschaltet und ausgetauscht werden.

Nach einer oben bereits erwähnten Ausführungsform der Erfindung sind zwei benachbarte Abzweigstutzen an dem Oberteil des Ofens vorgesehen, wobei der Winkel α zwischen diesen beiden Abzweigstutzen maximal 100°, vorzugsweise maximal 95°, bevorzugt maximal 90° und sehr bevorzugt maximal 85° beträgt. Nach besonders bevorzugter Ausführungsform der Erfindung ist ein Winkel von 80° oder von etwa 80° zwischen den beiden Abzweigstutzen verwirklicht. Der Winkel α wird dabei zwischen den Mittelachsen der Abzweigstutzen gemessen. Im Hinblick auf eine möglichst platzsparende bzw. wenig voluminöse Ausführung der erfindungsgemäßen Vorrichtung wird ein möglichst kleiner Winkel α zwischen den Abzweigstutzen gewählt. Dann ergibt sich zwischen den beiden Abzweigstutzen ein sehr schmaler Bereich der Ofeninnenwand, dessen Kühlung bei den aus dem Stand der Technik bekannten Vorrichtungen problematisch ist. Eine Kühlung auch dieses schmalen Zwischenraumes empfiehlt sich aber dringend um Probleme zu vermeiden.

Nach einer sehr bevorzugten Ausführungsform der erfindungsgemäßen Vorrichtung werden Kühlrohre zur Kühlung des ersten Abzweigstutzens aus dem ersten Abzweigstutzen heraus über den (schmalen) Ofeninnenwandabschnitt zwischen den beiden Anschlussöffnungen der Abzweigstutzen geführt und dann werden die Kühlrohre in den zweiten Abzweigstutzen zur Kühlung dieses zweiten Abzweigstutzens hereingeführt. Auf diese Weise kann eine einfache und effektive Kühlung des schmalen Zwischenraums verwirklicht werden. Das ist insbesondere möglich, weil im Rahmen der erfindungsgemäßen Kühlung mit einer Verdampfungskühlung gearbeitet wird, die kleine Rohrdurchmesser und insbesondere kleine Biegeradien bei den Kühlrohren ermöglicht. Aus diesem Grunde ist die problemlose Kühlung auch des schmalen Zwischenraums bei der erfindungsgemäßen Vorrichtung problemlos durchführbar.

Gemäß einer sehr bevorzugten Ausführungsvariante der Erfindung werden Kühlrohre, die zur Kühlung des Ofens an der Ofeninnenwand entlanglaufen in den ersten Abzweigstutzen zur Kühlung dieses ersten Abzweigstutzens hereingeführt und aus dem ersten Abzweigstutzen dann wieder herausgeführt. Anschließend werden diese Kühlrohre über den Ofeninnenwandabschnitt zwischen den beiden Anschlussöffnungen der Abzweigstutzen geführt und danach in den zweiten Abzweigstutzen zur Kühlung dieses zweiten Abzweigstutzens hereingeführt und daraufhin aus dem zweiten Abzweigstutzen wieder herausgeführt. Dann können diese Kühlrohre an der Ofeninnenwand weiter entlanglaufen. Wie oben bereits hervorgehoben, ermöglicht die Verdampfungskühlung mit Siedewasser kleine Biegeradien, die die problemlose Wicklung bzw. Führung der Kühlrohre durch die genannten Anlagenabschnitte ermöglichen.

Der Erfindung liegt die Erkenntnis zugrunde, dass unerwünschte relative Wärmedehnungen, insbesondere vertikale Wärmedehnungen zwischen Ofen und Abgaskanal effektiv und funktionssicher vermieden werden können, wenn der Ofen mit einem Kühlmedium der gleichen Temperatur gekühlt wird wie der Abgaskanal. Gegenüber den aus dem Stand der Technik bekannten Vorrichtungen kann auf aufwendige Kompensatoren im Übergangsbereich zwischen Ofen und Abgaskanal verzichtet werden. Der Erfindung liegt weiterhin die Erkenntnis zugrunde, dass eine besonders effektive Kühlung des Ofens und damit auch eine wirksame Vermeidung von störenden Wärmedehnungen erreicht werden kann, wenn bei der Kühlung des Ofens mit einer Verdampfungskühlung gearbeitet wird. Diese Kühlung mit Siedewasser ermöglicht außerdem in vorteilhafter Weise eine effektive Wärmerückgewinnung, die bei dem nach dem Stand der Technik verwendeten flüssigen Kühlwasser nicht ohne Weiteres möglich ist. Fernerhin können bei Einsatz der Verdampfungskühlung für den Ofen Korrosionserscheinungen und Ablagerungserscheinungen in den Kühlrohren an den Ofenwänden weitgehend vermieden werden. Weiterhin liegt der Erfindung die Erkenntnis zugrunde, dass mit den erfindungsgemäßen Kühlmaßnahmen, d.h. insbesondere mit der Verdampfungskühlung auch an den Ofen angeschlossene Abzweigstutzen sowie für die Kühlung schwer zugängliche Bereiche relativ problemlos gekühlt werden können. Das resultiert vor allem daraus, dass bei der Verdampfungskühlung Kühlrohre mit relativ geringem Durchmesser eingesetzt werden können und somit auch geringe Biegeradien der gewickelten Kühlrohre realisiert werden können. Ein weiterer Vorteil der Erfindung liegt darin, dass bei Kühlung des Ofens mit der relativ hohen Temperatur T₁ (beispielsweise 260°C) eine nachteilhafte Kondensation von Schwefeldioxid an den gekühlten Ofeninnenwänden vermieden werden kann. Hervorzuheben ist schließlich, dass die erfindungsgemäße Vorrichtung verhältnismäßig einfach und wenig aufwendig aufgebaut ist. Sie lässt sich daher auch relativ kostengünstig herstellen.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht einer erfindungsgemäßen Vorrichtung,
- Fig. 2: einen Querschnitt durch einen Teil des Gegenstandes nach Fig. 1 in der Draufsicht,

- Fig. 3: einen vergrößerten Ausschnitt aus der Fig. 2,
- Fig. 4: einen Querschnitt durch einen Teil einer besonderen Ausführungsform der erfindungsgemäßen Vorrichtung in der Draufsicht und
- Fig. 5: einen Teil des Gegenstandes gemäß Fig. 4 in abgewickeltem Zustand.

Die Figuren zeigen eine Vorrichtung zur Abkühlung von Abgasen, insbesondere zur Abkühlung von Abgasen aus einem Schmelzreduktionsofen zur Roheisenherstellung. Es ist ein Ofen 1 vorgesehen, aus dem die Abgase austreten. Im Oberteil 2 des Ofens ist ein Abgaskanal 3 zur Abführung und Kühlung der Abgase angeschlossen. Das Abgas tritt mit einer Temperatur von etwa 1450°C und unter einem Gasüberdruck von etwa 0,8 bar über Atmosphärendruck in den Abgaskanal 3 ein.

Ein an den Ofen angeschlossener Abgaskanalabschnitt 4 wird mit Hilfe eines Kühlmediums gekühlt, das eine Temperatur T₁ aufweist. Bei diesem Kühlmedium handelt es sich im Ausführungsbeispiel um Siedewasser und dieses dem Abgaskanal 3 zugeführte Kühlmedium hat eine Temperatur T₁ von 260°C. Das Kühlmedium wird durch Kühlrohre 9 des Abgaskanals 3 geleitet, welche Kühlrohre 9 im Ausführungsbeispiel die Primärwandung des Abgaskanals 3 bilden.

Erfindungsgemäß wird das Oberteil 2 des Ofens 1, an den der Abgaskanalabschnitt 4 angeschlossen ist, mit einem Kühlmedium gekühlt, das die gleiche Temperatur T₁ hat, wie das Kühlmedium für die Kühlung des Abgaskanals 3. Das Kühlmedium für die Kühlung des Oberteils 2 des Ofens 1 hat im Ausführungsbeispiel also auch eine Temperatur von 260°C. Diese Temperatur T₁ bezieht sich auf das dem Ofen 1 zugeführte Kühlmedium. Das Kühlmedium wird im Oberteil 2 des Ofens 1 durch Kühlrohre 10 des Ofens 1 geleitet, welche Kühlrohre 10 im Ausführungsbeispiel an der Ofeninnenwand des Oberteils 2 vorgesehen sind. Die Kühlrohre 10 sind hier zu einem Kühlmantel 11 gewickelt. Nach bevorzugter Ausführungsform der Erfindung besteht der Kühlmantel 11 in nicht näher dargestellter Weise aus einer Mehrzahl von Kühlmantelabschnitten, die separat ein- und abschaltbar sind. Es liegt im Rahmen der Erfindung, dass für die Kühlung des Oberteils 2 des Ofens 1 ebenfalls Siedewasser eingesetzt wird. Diese Verdampfungskühlung für den Ofen 1 bringt wesentliche Vorteile mit sich, die weiter oben bereits erläutert wurden. Nach einer Ausführungsform der Erfindung können auch Teile des unteren Ofenteiles in der Weise gekühlt werden, wie das Ofenoberteil.

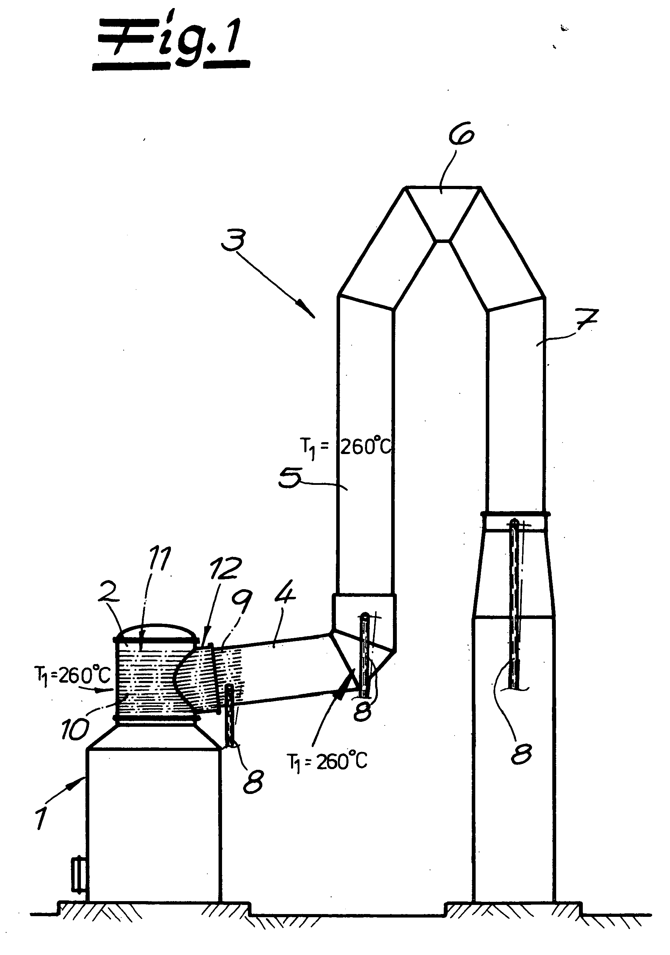

Im Ausführungsbeispiel nach den Fig. 1 bis 3 weist der Ofen 1 an seinem Oberteil 2 einen Abzweigstutzen 12 auf, der für den Anschluss des Abgaskanals 3 bzw. des Abgaskanalabschnitts 4 vorgesehen ist. Es liegt im Rahmen der Erfindung, dass dieser Abzweigstutzen 12 mit dem Kühlmedium gekühlt wird, mit dem auch das Oberteil 2 des Ofens 1 gekühlt wird. Mit anderen Worten wird das Kühlmedium für den Ofen 1 durch Kühlrohre 10 geleitet, die sowohl an der Innenwand des Ofens 1 vorgesehen sind als auch an der Wandung bzw. an der Innenwand des Abzweigstutzens 12. Bei dem Kühlmedium für den Abzweigstutzen 12 handelt es sich also vorzugsweise ebenfalls um Siedewasser. Es liegt im Rahmen der Erfindung, dass auch der Abzweigstutzen 12 mit Kühlmedium einer Temperatur T₁ gekühlt wird.

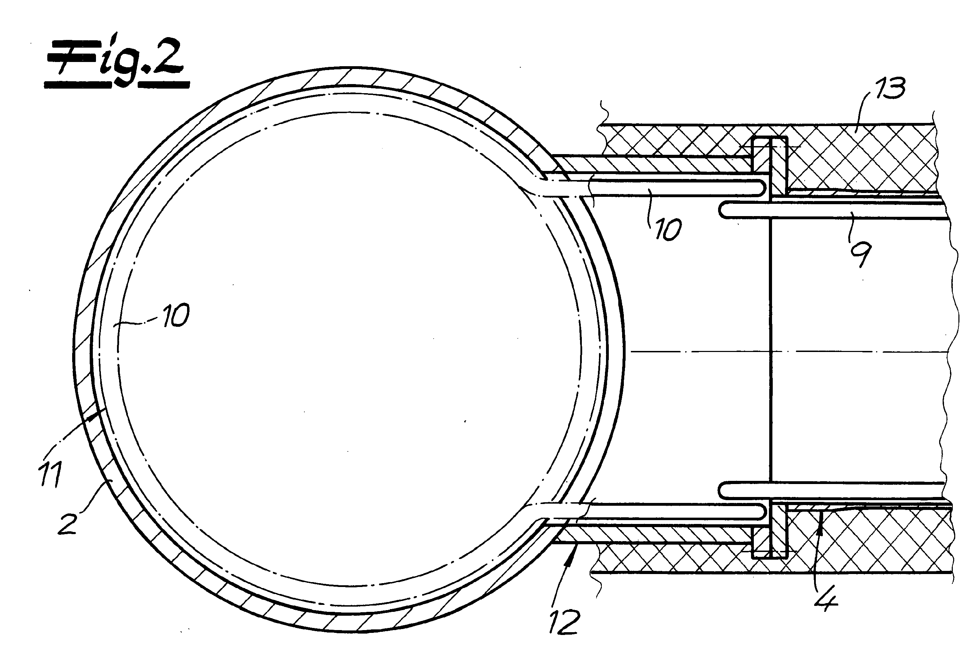

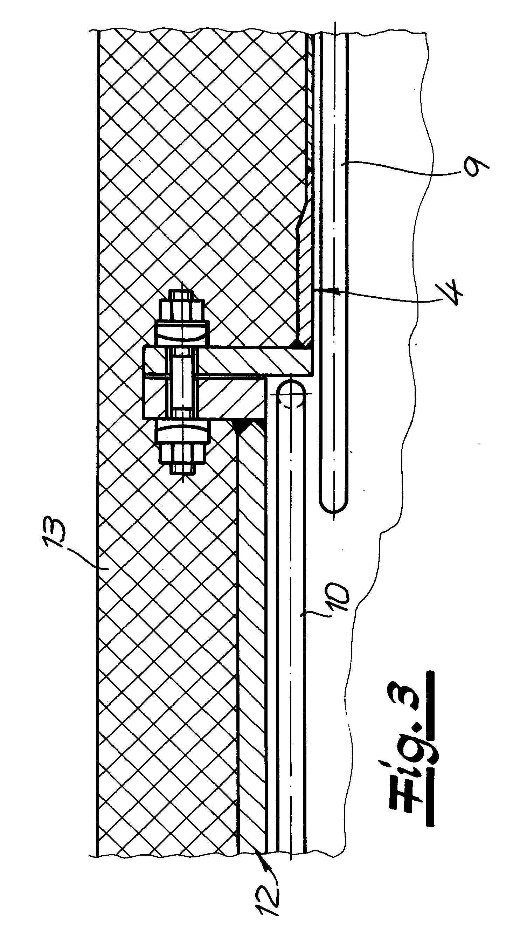

Insbesondere die Fig. 2 und 3 zeigen den Anschluss des Abgaskanals 3 bzw. des Abgaskanalabschnitts 4 an den Abzweigstutzen 12 des Ofens 1. Es ist erkennbar, dass der Abgaskanalabschnitt 4 in den Abzweigstutzen 12 eingeschoben ist und an dem Abzweigstutzen 12 befestigt ist. Die Kühlrohre 9 bilden die Primärwandung des Abgaskanalabschnitts 4 und die Kühlrohre 10 bilden die Primärwandung des Abzweigstutzens 12. Die Kühlrohre 9 und 10 führen beide zweckmäßigerweise Siedewasser mit einer Temperatur T₁ von 260°C als Kühlmedium. Wie vorstehend bereits beschrieben können auf diese Weise effektiv störende relative Wärmedehnungen zwischen Ofen 1 bzw. Abzweigstutzen 12 und Abgaskanal 3 vermieden werden. Sowohl der Abgaskanalabschnitt 4 als auch der Abzweigstutzen 12 weist an seiner Außenseite eine Isolierschicht 13 auf.

Vorzugsweise und im Ausführungsbeispiel werden die Kühlrohre 10, die an der Innenwand des Oberteils 2 des Ofens 1 vorgesehen sind, von dieser Innenwand in den Abzweigstutzen 12 weitergeführt. Die Kühlrohre 10 werden also nicht nur zum Kühlmantel 11 im Ofen 1 gewickelt, sondern auch gleichsam in den Abzweigstutzen 12 eingewickelt. Mit anderen Worten erstrecken sich die Kühlrohre 10 für die Kühlung des Ofens 1 auch in den Abzweigstutzen 12. Das wird anhand einer speziellen Ausführungsform weiter unten noch näher erläutert.

In der Fig. 1 ist im Übrigen erkennbar, dass der Abgaskanal 3 über als Vertikalstützen 8 ausgeführte Abstützungselemente an einem Untergrund abgestützt wird. Die Vertikalstützen 8 werden vorzugsweise und im Ausführungsbeispiel mit einem Medium erwärmt, wobei dieses Medium für die Vertikalstützen 8 die gleiche Temperatur T₁ aufweist wie das Kühlmedium für den Abgaskanal 3 und wie das Kühlmedium für den Ofen 1 bzw. für den Abzweigstutzen 12. Im Ausführungsbeispiel hat also auch das Medium für die Erwärmung der Vertikalstützen 8 eine Temperatur T₁ von 260°C. Bei dem Medium für die Vertikalstützen 8 handelt es sich vorzugsweise ebenfalls um Siedewasser. Zweckmäßigerweise sind die Vertikalstützen 8 als Hohlprofile, beispielsweise als Rohre ausgebildet, die von dem Medium durchströmt werden. Durch diese Erwärmung der Vertikalstützen 8 können effektiv relative Wärmedehnungen von Abgaskanalabschnitten 4 vermieden werden, so dass es zu keinen diesbezüglichen Zwängen kommt. Das hat den beachtlichen Vorteil, dass Kompensatoren zwischen einzelnen Abschnitten des Abgaskanals 3 zur Kompensierung von Wärmedehnungen nicht erforderlich sind. Die Vertikalstützen 8 stützen sich mit ihren unteren Enden auf ein und derselben nicht näher dargestellten Lasteinleitungsebene ab. Dadurch, dass sowohl das Oberteil 2 des Ofens 1 sowie der Abzweigstutzen 12 als auch der Abgaskanal 3 mit einem Kühlmedium mit der gleichen Temperatur T₁ gekühlt werden, kann die vorgenannte Lasteinleitungsebene für die Abstützungselemente sehr einfach und genau festgelegt werden. Die Abstützungselemente bzw. Vertikalstützen 8 sind nach bevorzugter Ausführungsform und im Ausführungsbeispiel nach Fig. 1 als Pendelstützen ausgebildet. Dabei ist eine Vertikalstütze 8 über eine Gelenkverbindung an den Abgaskanal 3 angeschlossen und vorzugsweise über eine nicht dargestellte Gelenkverbindung im Bereich der Lasteinleitungsebene angeschlossen. Das hat den Vorteil, dass horizontale Wärmedehnungen ebenfalls problemlos aufgenommen bzw. kompensiert werden können.

In der Fig. 1 ist weiterhin erkennbar, dass der Abgaskanal 3 zunächst den bereits erwähnten horizontalen bzw. leicht geneigten Abgaskanalabschnitt 4 aufweist, der in einen ersten vertikalen Abgaskanalabschnitt 5 übergeht, in dem das Abgas vertikal nach oben geleitet wird. An diesen ersten vertikalen Abgasabschnitt 5 schließt ein Umlenkabschnitt 6 an und daran wiederum ein zweiter vertikaler Abgaskanalabschnitt 7, in dem das Abgas wieder nach unten geleitet wird. In der Fig. 1 wurde im Übrigen die Weiterführung des Abgases nach dem Abgaskanal 3 nicht weiter dargestellt. Das in dem Abgaskanal 3 abgekühlte Abgas kann beispielsweise zur Vorwärmung von Erz für die Stahlherstellung dienen.

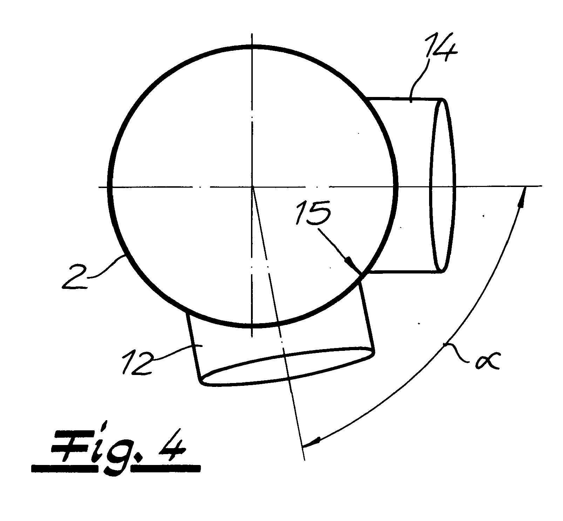

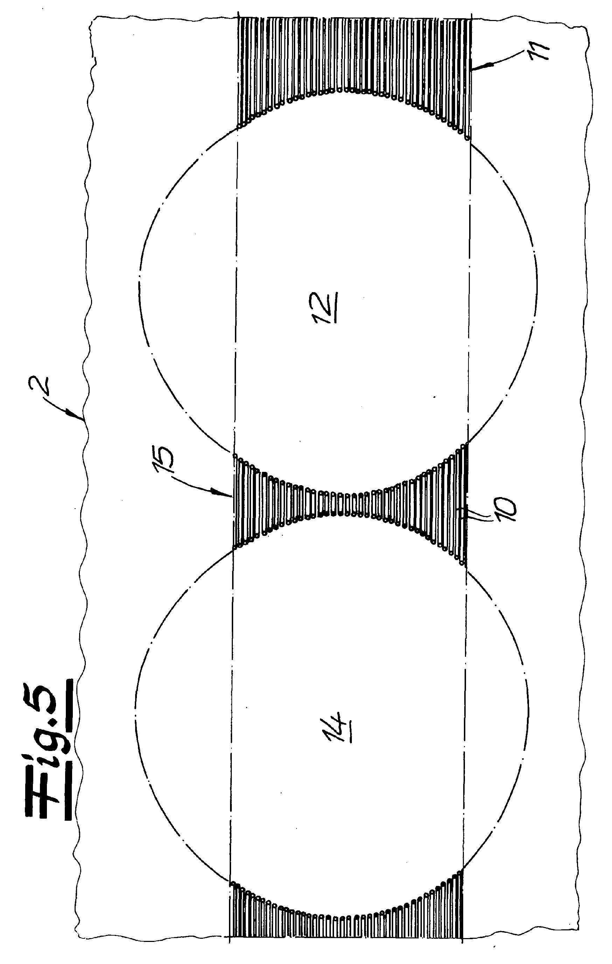

Im Ausführungsbeispiel nach den Fig. 4 und 5 sind zwei benachbarte Abzweigstutzen 12 und 14 an dem Oberteil 2 des Ofens 1 vorgesehen. Der Winkel α zwischen diesen beiden Abzweigstutzen 12, 14 (der zwischen den Mittelachsen der Abzweigstutzen 12, 14 gemessen wird) beträgt im Ausführungsbeispiel 80°.

Dieser Winkel α wird möglichst klein gewählt, damit eine wenig voluminöse Vorrichtung realisiert werden kann. Das hat aber zur Folge, dass bei entsprechenden aus dem Stand der Technik bekannten Anlagen der sehr schmale Zwischenraum zwischen den Abzweigstutzen 12 und 14 nicht ohne Weiteres gekühlt werden kann. Der Erfindung liegt die Erkenntnis zugrunde, dass eine effektive Kühlung dieses schmalen Zwischenraums bzw. dieses Ofeninnenwandabschnitts 15 für eine langfristige funktionssichere Betriebsweise der Vorrichtung wesentlich ist. Im Rahmen der erfindungsgemäßen Maßnahme kann dieser Ofeninnenwandabschnitt 15 zwischen den beiden Abzweigstutzen 12, 14 wirksam gekühlt werden. In der Fig. 5 ist erkennbar, dass dazu die zu dem Kühlmantel 11 gewickelten Kühlrohre 10 des Ofens 1 zunächst auf der rechten Seite entlang der Innenwand des Ofens 1 verlaufen. Dann werden diese Kühlrohre in den ersten Abzweigstutzen 12 geführt bzw. gleichsam eingewickelt und diese Kühlrohre werden auf der linken Seite des ersten Abzweigstutzens 12 wieder aus diesem Abzweigstutzen 12 herausgeführt und anschließend über den schmalen Ofeninnenwandabschnitt 15 geführt. Dadurch ist eine sehr effektive Kühlung dieses Ofeninnenwandabschnittes 15 gewährleistet. Die Kühlrohre 10 werden dann auf der linken Seite des Ofeninnenwandabschnittes 15 in den zweiten Abzweigstutzen 14 eingeführt bzw. eingewickelt und auf der linken Seite dieses zweiten Abzweigstutzens 14 wieder aus dem Abzweigstutzen 14 herausgeführt und weiter entlang der Innenwand des Ofens 1 entlang geführt. Diese Führung der Kühlrohre 10 ist möglich, weil im Rahmen der Erfindung mit einer Verdampfungskühlung gearbeitet wird und weil diese Verdampfungskühlung Kühlrohre 10 mit sehr geringen Durchmessern ermöglicht, so dass für diese Kühlrohre 10 auch sehr kleine Biegeradien möglich sind, die die erläuterte Führung der Kühlrohre 10 möglich machen.

## Patentansprüche

1. Vorrichtung zur Abkühlung von Abgasen, insbesondere zur Abkühlung von Abgasen aus einem Schmelzreduktionsofen zur Roheisenherstellung,
wobei ein Ofen (1) vorgesehen ist, aus dem die Abgase austreten und wobei im oberen Bereich des Ofens (1) ein Abgaskanal (3) zur Abführung und Kühlung der Abgase angeschlossen ist,
wobei zumindest ein an den Ofen (1) angeschlossener Abgaskanalabschnitt (4) durch ein Kühlmedium gekühlt wird, das eine Temperatur T₁ aufweist
und wobei zumindest das Oberteil (2) des Ofens (1), an den der Abgaskanalabschnitt (4) angeschlossen ist, mit einem Kühlmedium gekühlt wird, das ebenfalls die Temperatur T₁ aufweist.

2. Vorrichtung nach Anspruch 1, wobei ein Abzweigstutzen (12) der dem Oberteil (2) des Ofens (1) und dem Abgaskanalabschnitt (4) zwischengeschaltet ist, ebenfalls mit dem Kühlmedium des Ofens (1) gekühlt ist.

3. Vorrichtung nach einem der Ansprüche 1 oder 2, wobei die Temperatur T₁ mehr als 150°C, vorzugsweise mehr als 200°C und bevorzugt mehr als 230°C beträgt.

4. Vorrichtung nach einem der Ansprüche 1 bis 3, wobei das Kühlmedium für das Oberteil (2) des Ofens (1) und/oder für den Abzweigstutzen (12, 14) Siedewasser ist.

5. Vorrichtung nach einem der Ansprüche 1 bis 4, wobei das Kühlmedium für den Ofen (1) durch Kühlrohre (10) geführt wird, die an der Innenwand des Oberteils (2) des Ofens (1) angeordnet sind.

6. Vorrichtung nach einem der Ansprüche 1 bis 5, wobei sich die Kühlrohre (10) für die Kühlung des Ofens (1) auch in den Abzweigstutzen (12, 14) erstrecken.

7. Vorrichtung nach einem der Ansprüche 1 bis 6, wobei die Kühlrohre (9, 10) einen Kühlmantel (11) bilden, der aus einer Mehrzahl von Kühlmantelabschnitten besteht, die separat absperrbar sind.

8. Vorrichtung nach einem der Ansprüche 1 bis 7, wobei zwei benachbarte Abzweigstutzen (12, 14) an dem Oberteil (2) des Ofens (1) vorgesehen sind, wobei der Winkel α zwischen den beiden Abzweigstutzen (12, 14) maximal 100°, vorzugsweise maximal 90° und bevorzugt maximal 85° beträgt.

9. Vorrichtung nach Anspruch 8, wobei Kühlrohre (10) aus dem ersten Abzweigstutzen (12) heraus über den Ofeninnenwandabschnitt (15) zwischen den beiden Anschlussöffnungen der Abzweigstutzen (12, 14) geführt werden und dann in den zweiten Abzweigstutzen (14) hineingeführt werden.

10. Vorrichtung nach Anspruch 9, wobei Kühlrohre (10) zur Kühlung des Ofens (1) in den ersten Abzweigstutzen (12) zur Kühlung dieses ersten Abzweigstutzens (12) hereingeführt und aus dem ersten Abzweigstutzen (12) wieder herausgeführt sind und anschließend über den Ofeninnenwandabschnitt (15) zwischen den beiden Anschlussöffnungen der Abzweigstutzen (12, 14) geführt sind und danach in den zweiten Abzweigstutzen (14) zur Kühlung dieses zweiten Abzweigstutzens (14) hereingeführt und aus dem zweiten Abzweigstutzen (14) wieder herausgeführt sind.
